# EUROPÄISCHE PATENTSCHRIFT

(11) **EP 0 697 905 B1**
(45) Veröffentlichungstag und Bekanntmachung des Hinweises auf die Patenterteilung: **01.09.1999**
(21) Anmeldenummer: 94916178.0
(22) Anmeldetag: 30.04.1994
(51) Int. Cl.: B01D 15/08, B01J 20/32

(54) **VERFAHREN UND TRÄGER FÜR DIE GELPERMEATIONSCHROMATOGRAPHIE**
METHOD AND SUPPORT MATERIAL FOR GEL-PERMEATION CHROMATOGRAPHY
PROCEDE ET SUPPORT POUR LA CHROMATOGRAPHIE PAR PERMEATION DE GEL

(30) Priorität: 13.05.1993 DE 4316136
(43) Veröffentlichungstag der Anmeldung: 28.02.1996
(73) Patentinhaber: MERCK PATENT GmbH, 64293 Darmstadt (DE)
(72) Erfinder: MÜLLER, Werner, D-64646 Heppenheim (DE)
(86) Internationale Anmeldenummer: EP9401378
(87) Internationale Veröffentlichungsnummer: WO9426379

(56) Entgegenhaltungen:
- EP-A- 0 106 769
- EP-A- 0 268 243
- EP-A- 0 337 144
- EP-A- 0 366 042
- EP-A- 0 425 848
- DE-A- 4 129 901
- US-A- 4 332 694
- DATABASE WPI Week 7805, Derwent Publications Ltd., London, GB; AN 78-08893A & JP,A,52 150 093 (SEKISUI CHEMI IND) 13. Dezember 1977

## Beschreibung

Die Erfindung betrifft ein verbessertes Verfahren für die Gelpermeationschromatographie und Trägermaterialien für dieses Verfahren.

Die Gelpermeationschromatographie (GPC) zur Größentrennung von Makromolekülen ist zu einer Standardmethode für die Trennung von Biopolymeren, insbesondere von Proteinen geworden. Dazu werden Trägermaterialien benötigt, die eine hydrophile Oberfläche besitzen, und die möglichst kein unspezifisches Adsorptionsverhalten aufweisen. Um das starke unspezifische Adsorptionsverhalten, das bei der Verwendung von underivatisierten porösen Kieselgelen auftritt, zu vermeiden, wird in US 5,035,803 vorgeschlagen, die Oberflächen des Kieselgels mit wasserlöslichen Vinylpolymeren zu belegen. Bei dem in dieser Druckschrift benutzten Pfropfungsverfahren entstehen Polymere, die zufallsbedingt an beliebiger Stelle der Polymerkette, unter Umständen auch mehrfach, mit dem Basisträger verbunden sind.

Für das jeweilige Trennproblem muß die Porenweite angepaßt werden. Die Prozesse, die zur Einstellung der Porenweite von Trennmaterialien eingesetzt werden, sind häufig arbeitsaufwendig. Dazu wird entweder der Vernetzungsgrad bei der Polymerisation eingestellt oder die Poren von Silikagel werden durch Nachbehandlungsschritte aufgeweitet.

EP-A-0 337 144 offenbart Trennmaterialien auf der Grundlage von Pfropfpolymerisaten, die Vinylamin-, (Meth)acrylat- oder (Meth)acrylamidderivate als Monomereinheiten enthalten. Diese Trennmaterialien sind für lonenaustausch-, reversed-phase- oder Affinitätschromatographie geeignet.

EP-A-0 425 848 offenbart Trennmaterialien für die Gelpermeationschromatographie, bei denen die Poren eines Basisträgers vollständig mit einem Polymer ausgefüllt sind.

Es wurde gefunden, daß weitporige Trägermaterialien, deren Porenweite so groß ist, daß keine oder nur unzureichende Trennung von Substanzen auf der Grundlage der Gelpermeationschromatographie mehr möglich ist, hervorragende Trennergebnisse zeigen, wenn lineare Polymere aus wasserlöslichen Vinylmonomeren auf die aliphatischen Hydroxylgruppen dieser Träger aufgepfropft sind. Bei diesen erfindungsgemäßen Trägermaterialien ist jeweils eine endständige Monomereinheit mit dem Basisträger kovalent verbunden.

Die Auswahl der Porenweite für das jeweilige Trennproblem ist also weitgehend unkritisch, die Selektivität des Trägermaterials wird durch die Eigenschaften des aufgepfropften Polymers bestimmt, die durch die Polymerisationsbedingungen gut kontrollierbar sind.

Gegenstand der vorliegenden Erfindung ist ein Verfahren zur Trennung mindestens zweier Substanzen in einem Gemisch mittels Gelpermeationschromatographie, dadurch gekennzeichnet, daß das verwendete Trägermaterial lineare Polymere aus wasserlöslichen Vinylmonomeren enthält, die auf aliphatische Hydroxylgruppen des Basisträgers aufgepfropft sind, und die mit einer endständigen Monomereinheit mit dem Basisträger kovalent verbunden sind.

Gegenstand der vorliegenden Erfindung ist die Verwendung eines Trägermaterials bestehend aus einem Basisträger, der aliphatische Hydroxylgruppen enthält, auf die kovalent gebundene lineare Polymere aus wasserlöslichen Vinylmonomeren aufgepfropft sind, wobei die Polymeren mit einer endständigen Monomereinheit mit dem Basisträger kovalent verbunden sind, für die Gelpermeationschromatographie.

Gegenstand der vorliegenden Erfindung sind Trägermaterialien für die Gelpermeationschromatographie auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalent gebundenen Polymeren jeweils über eine endständige Monomereinheit an den Träger gebunden sind,
c) die Polymeren Monomereinheiten der Formel I enthalten, d) die Monomereinheiten linear verknüpft sind, 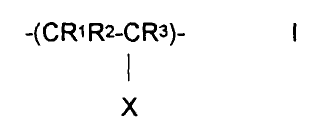 worin
   - R¹, R² und R³: unabhängig voneinander H oder CH₃,
   - X: einen heterocyclischen Rest, mit der Maßgabe, daß X nicht 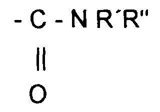 oder - CH₂-R'R'',
   worin R' und R'' ein cyclischer oder bicyclischer Rest mit 5 - 10 C-Atomen, von denen eines oder mehrere durch N oder NH, N oder NH und S oder N oder NH und O ersetzt sein können, bedeutet,
   oder
   einen Rest der Formel II 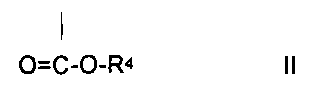 oder
   einen Rest der Formel III, 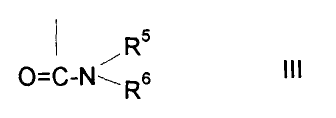 worin
   - R4: einen ein- oder mehrfach hydroxylierten C₂-C₇-Alkylrest, in dem eine oder mehrere nicht benachbarte CH₂-Gruppen durch -O- ersetzt sein können,
   und
   - R⁵ und R⁶: unabhängig voneinander einen ein- oder mehrfach hydroxylierten C₂-C₇-Alkylrest, in dem eine oder mehrere nicht benachbarte CH₂-Gruppen durch -O- ersetzt sein können, wobei einer der beiden Reste R⁵ oder R⁶ auch H sein können,
   bedeuten.

Gegenstand der vorliegenden Erfindung ist ein Verfahren zur Herstellung von Trägermaterialien auf Grundlage von hydroxylgruppenhaltigen Basisträgern, auf deren Oberflächen Polymere durch Pfropfpolymerisation kovalent gebunden werden, dadurch gekennzeichnet, daß die hydroxylgruppenhaltigen Basisträgerteilchen in Gegenwart von Cer(IV)-lonen in einer Lösung enthaltend Monomere der Formel IV 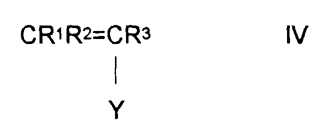 worin
- R¹, R² und R³: unabhängig voneinander H oder CH₃
und
- Y: einen heterocyclischen Rest, mit der Maßgabe, daß Y nicht 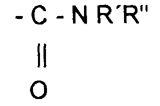 oder - CH₂-R'R'',
worin R' und R'' ein cyclischer oder bicyclischer Rest mit 5 - 10 C-Atomen, von denen eines oder mehrere durch N oder NH, N oder NH und S oder N oder NH und O ersetzt sein können, bedeutet,
oder
einen Rest der Formel V 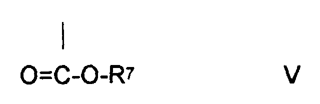 oder
einen Rest der Formel VI, 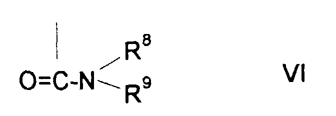 worin
- R⁷: einen C₂-C₇-Alkylrest mit einer oder mehreren Vorläufergruppen für Hydroxylgruppen, in dem eine oder mehrere nicht benachbarte CH₂-Gruppen durch -O- ersetzt sein können,
und
- R⁸ und R⁹: unabhängig voneinander einen C₂-C₇-Alkylrest mit einer oder mehreren Vorläufergruppen für Hydroxylgruppen, in dem eine oder mehrere nicht benachbarte CH₂-Gruppen durch -O- ersetzt sein können, wobei einer der beiden Reste R⁸ oder R⁹ auch H sein können,
bedeuten,
und die genannten Monomeren polymerisiert werden, und gegebenenfalls eine Vorläuferverbindung in eine Hydroxylgruppe umgewandelt wird.

Die Abbildung 1 stellt das Trennverhalten dar: Kieselgel wurde als Basisträger verwendet und die Reaktionszeit für die Polymerisation variiert.

Die Abbildung 2 stellt das Trennverhalten von nicht-modifiziertem und erfindungsgemäß modifiziertem hydroxylierten Polymethacrylat (Fractogel® HW 65 (s)) gegenüber.

Als Basisträger sind in der Chromatographie gebräuchliche poröse Trägermaterialien geeignet, die aliphatische Hydroxylgruppen enthalten; zu derartigen Materialien gehören Polysacchararide wie vernetzte Dextrane oder Glucomannane, weiterhin hydroxylgruppenhaltige Poly(meth)acrylsäurederivate und auch DIOL-modifizierte Kieselgele. Die Porenweite des Basisträgers ist vorzugsweise größer, als es dem vorgesehenem Trennproblem entsprechen würde. In diesem Sinn ist erfindungsgemäß der Begriff weitporig zu verstehen. Beispielsweise werden DIOL-modifizierte Kieselgele mit Porenweiten von 500 bis 4000 Angström bevorzugt als Basisträger eingesetzt.

Wasserlösliche Vinylmonomere sind dem Fachmann in großer Zahl bekannt. Dazu gehören (Meth)acrylsäurederivate wie Acrylamid oder Methacrylamid, ferner (2,3-Dihydroxypropyl)-methacrylat oder N-(2-Methoxyethyl)-acrylamid oder N-(2,3-Dihydroxypropyl)-acrylamid. Außerdem gehören dazu vinylierte Heterocyclen, wie z.B. 1 -Vinylimidazol, N-Vinylpyrrolidon, 2-Vinylpyridin, 4-Vinylpyridin, 4-Vinylpyrrolidon-N-oxid.

Da die Pfropfungsreaktion nach Mino und Kaizerman (1958) J. Polymer. Sc. **31**, 242-243 und (1959) J. Polymer. Sc. **38**, 393-401, auf der Reaktion mit aliphatischen Hydroxylgruppen beruht, müssen anstelle von hydroxylgruppenhaltigen Monomeren wie (2,3-Dihydroxypropyl)-methacrylat Vorläuferverbindungen wie (2,3-Epoxypropyl)-methacrylat eingesetzt werden. Nach der Polymerisation werden daraus in bekannter Weise die Hydroxylgruppen erhalten. Bei der Polymerisation unter den genannten Bedingungen entstehen, genau wie in DE 38 11 042 offenbart, Polymere mit einem niedrigen Polymerisationsgrad (2 ≤ n ≤ 100). Die Porenräume sind folglich nicht völlig ausgefüllt.

Bei dem erfindungsgemäßen chromatographischen Trennverfahren wird die Diffusion von Makromolekülen durch die auf den Basisträger aufgepfropften linearen Polymeren so stark beeinflußt, wie es in ähnlicher Weise von Trennungen bei der vorbekannten Gelpermeationschromatographie bekannt ist. Jedoch wird bei dem erfindungsgemäßen Trennungsverfahren eine weitporige Matrix benutzt, deren Porenraum für die Analyte voll zugänglich ist; unter diesen Bedingungen würde bei vorbekannten Gelpermeationschromatographieverfahren keine Trennung erreichbar sein.

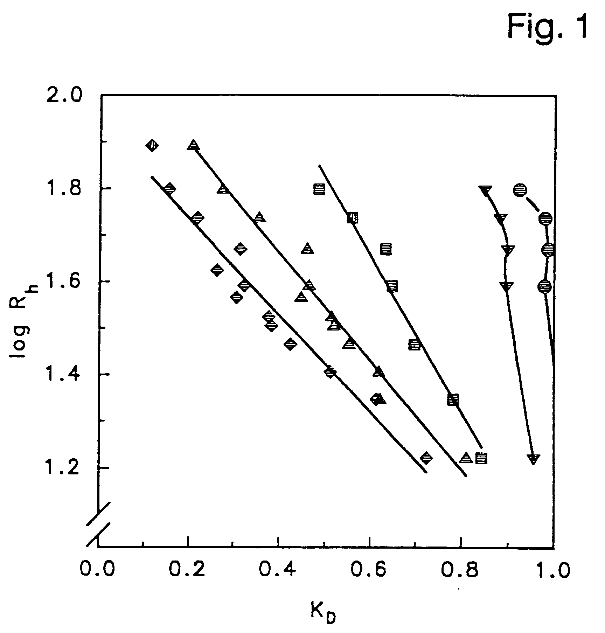

In Abbildung 1 sind die logarithmierten hydrodynamischen Radien (log Rₕ) gegen die Verteilungskoeffizienten K_{D} zwischen mobiler und intraporöser Phase für eine Reihe von Standard-Eichproteinen (12 600-132 0000 Dalton) aufgetragen. Die verschiedenen Trägermaterialien wurden durch unterschiedliche Reaktionszeit bei der Polymerisation erhalten:
- ●:: unmodifiziertes Ausgangsmaterial
- ▼:: Reaktionszeit 30 Minuten
- ■:: Reaktionszeit 90 Minuten
- ▲:: Reaktionszeit 240 Minuten
- ◆:: Reaktionszeit 21 Stunden.

Weitere experimentelle Angaben finden sich in den Beispielen 1 und 3. Wie aus der Abbildung hervorgeht, zeigt das Ausgangsprodukt für die verwendeten Proteine so gut wie keine Trenneigenschaften; der gesamte Poreninnenraum ist für alle Proteine gleichermaßen zugänglich. Nach Pfropfung über zunehmende Zeiträume wird aus diesem Material ein GPC-Träger hoher Selektivität mit einem Einsatzbereich für Proteine von 2 - 3 Größenordnungen (siehe Tabelle 1). Die nach 21 Stunden erzielte Selektivität von 0,37 weist das erfindungsgemäße Trägermaterial als hervorragenden GPC-Träger aus.

**Tabelle 1**

| Charakteristische Kenndaten der erfindungsgemäß erzeugten Trägermaterialien (experimentell Einzelheiten siehe Beispiele 1 und 3): | | | | | |
|---|---|---|---|---|---|
| | Reaktionszeit (min) | | | | |
| | 0 | 30 | 90 | 240 | 21 h |
| Zwischenkornvolumen/ml | 0,23 | 0,23 | 0,23 | 0,23 | 0,23 |
| Gerüstvolumen/ml | 0,200 | 0,215 | 0,230 | 0,239 | 0,257 |
| Porenvolumen/ml | 0,569 | 0,554 | 0,539 | 0,530 | 0,512 |
| Permeabilität¹⁾ | 2,46 | 2,40 | 2,34 | 2,29 | 2,21 |
| Porosität²⁾ | 0,740 | 0,721 | 0,701 | 0,689 | 0,666 |
| Selektivität³⁾ | - | - | 0,175 | 0,298 | 0,370 |

| | | | | | |
|---|---|---|---|---|---|
| Erläuterungen: ¹⁾ Permeabilität = Porenvolumen/Zwischenkornvolumen | | | | | |
| ²⁾ Porosität = Porenvolumen / (Porenvolumen + Gerüstvolumen) | | | | | |
| ³⁾ Selektivität = - △K_{D}/△ log M (K_{D}: Verteilungskoeffizient des Analyten; M: Molekulargewicht des Analyten) | | | | | |

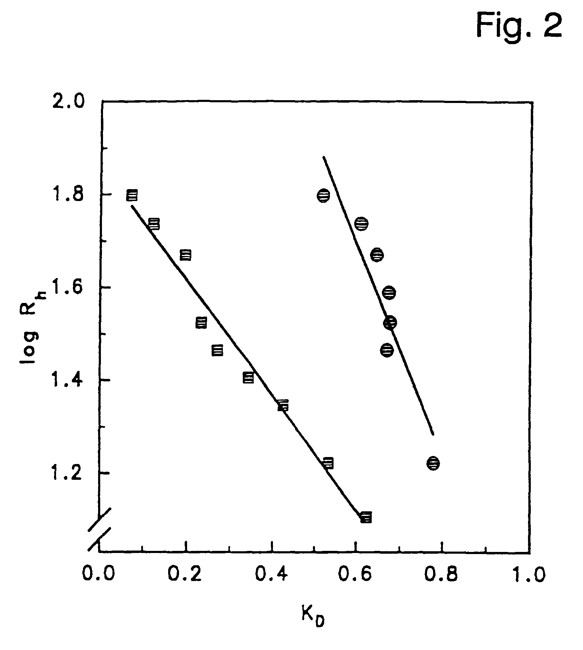

In Abbildung 2 sind in ähnlicher Weise die Ergebnisse bei der Verwendung von unmodifiziertem (●) und erfindungsgemäß modifiziertem (■) Fractogel® gegenübergestellt. Die weiteren experimentellen Angaben finden sich in den Beispielen 2 und 3.

In Tabelle 2 sind die charakteristischen Daten des erhaltenen Produktes zusammengestellt. Die Selektivität wird durch die Modifizierung von 0,151 auf 0,348 gesteigert.

**Tabelle 2**

| Charakteristische Kenndaten der erfindungsgemäß erzeugten Trägermaterialien (experimentell Einzelheiten siehe Beispiele 2 und 3): | | |
|---|---|---|
| | Vergleich | erfindungsgemäß |
| Zwischenkornvolumen/ml | 0,341 | 0,293 |
| Gerüstvolumen/ml | 0,133 | 0,167 |
| Porenvolumen/ml | 0,526 | 0,540 |
| Permeabilität¹⁾ | 1,54 | 1,84 |
| Porosität²⁾ | 0,798 | 0,764 |
| Selektivität³⁾ | 0,151 | 0,348 |

| | | |
|---|---|---|
| Erläuterungen: ¹⁾ Permeabilität = Porenvolumen/Zwischenkornvolumen | | |
| ²⁾ Porosität = Porenvolumen / (Porenvolumen + Gerüstvolumen) | | |
| ³⁾ Selektivität = - △K_{D}/△ log M (K_{D}: Verteilungskoeffizient des Analyten; M: Molekulargewicht des Analyten) | | |

Auch ohne weitere Ausführungen wird davon ausgegangen, daß ein Fachmann die obige Beschreibung in weitesten Umfang nutzen kann. Die bevorzugten Ausführungsformen sind deswegen lediglich als beschreibende, keineswegs als in irgendeine Weise limitierende Offenbarung aufzufassen.

Die folgenden Beispiele sollen die Erfindung näher erläutern.

### Beispiele: Beispiel 1: Herstellung eines GPC-Trägers durch Pfropfung auf

### Kieselgel

150 ml LiChrospher®-Diol (2000 Angström Porenweite; Partikelgröße 7 µm) werden mit 200 ml Wasser und 100 ml einer 4molaren wäßrigen Lösung von N-(2-Methoxyethyl)-acrylamid mit 30%iger HClO₄ auf pH 2 eingestellt und unter Argon mit 50 ml einer Lösung von 11,7 g Ammoniumcer-(IV)-nitrat in 0,5 M HNO₃ bei 40 °C unter Rühren versetzte Nach 30, 90 und 240 Minuten werden je 100 ml Suspension entnommen, jeweils mit 400 ml Wasser verdünnt und auf einem Papierfilter abgesaugt Anschließend wird das Produkt jeweils in einem Gemisch aus je 50 ml 0,4 M Na₂SO₃ und 0,4 M H₂SO₄ suspendiert und nach der völligen Entfärbung mit 100 ml Wasser, 250 ml 0,2 M Natriumacetatlösung und 500 ml Wasser neutral gewaschen.

Der übrige Ansatz wird nach insgesamt 21 Stunden in der gleichen Weise aufgearbeitet.

### Beispiel 2: Herstellung eines GPC-Trägers durch Pfropfung auf Fractogel®

100 ml Fractogel® HW 65 (s) werden mit 200 ml 0,2 M Natriumacetatlösung und 800 ml Wasser gewaschen, in 200 ml Wasser und 84 ml einer 4molaren wäßrigen Lösung von N-(2-Methoxyethyl)-acrylamid suspendiert und nach Auffüllen auf 450 ml und Einstellen des pH- Wertes auf 2 mit 30%iger Perchlorsäure unter Argon mit einer Lösung von 5,85 g Ammonium-cer-(IV)-nitrat in 50 ml 0,5 M Salpetersäure bei 40 °C unter Rühren versetzt. Der Ansatz wird nach 16 h wie in Beispiel 1 beschrieben aufgearbeitet.

### Beispiel 3: Chromatographie von Proteinen auf GPC-Trägern

Die jeweiligen GPC-Gele aus den Beispielen 1 und 2 werden in jeweils 1 M NaCl, 50 mM Phosphatpuffer (pH 7,5) in Glassäulen (Superformance® 300 x 10 mm) unter Druck gepackt und an einer inerten HPLC-Anlage (Merck-Hitachi) mit 0,3 M NaCl in 10 mM Natriumphosphatpuffer (pH 7,2) bei einem Fluß von 1,5 ml/min äquilibriert. Danach werden die Kalibrationsproteine entweder einzeln oder im Gemisch in Konzentrationen von je 1 mg in 0,2 ml Puffer (0,3 M NaCl in 10 mM Natriumphosphatpuffer (pH 7,2)) aufgetragen und bei einem Fluß von 0,5 ml/min eluiert. Die Elutionsdiagramme werden bei 280 nm photometrisch gemessen.

## Patentansprüche

1. Verfahren zur Trennung mindestens zweier Substanzen in einem Gemisch mittels Gelpermeationschromatographie, dadurch gekennzeichnet, daß das verwendete Trägermaterial lineare Polymere aus wasserlöslichen Vinylmonomeren enthält, die auf aliphatische Hydroxylgruppen des Basisträgers aufgepfropft sind, und die jeweils mit einer endständigen Monomereinheit mit dem Basisträger kovalent verbunden sind.

2. Verwendung eines Trägermaterials bestehend aus einem Basisträger, der aliphatische Hydroxylgruppen enthält, auf die kovalent gebundene lineare Polymere aus wasserlöslichen Vinylmonomeren aufgepfropft sind, wobei die Polymeren jeweils mit einer endständigen Monomereinheit mit dem Basisträger kovalent verbunden sind, für die Gelpermeationschromatographie.

3. Trägermaterialien für die Gelpermeationschromatographie auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalent gebundenen Polymeren über eine endständige Monomereinheit an den Träger gebunden sind,
c) die Polymeren Monomereinheiten der Formel I enthalten,
d) die Monomereinheiten linear verknüpft sind, 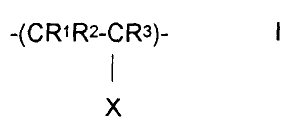 worin
R¹, R² und R³ unabhängig voneinander H oder CH₃,
X einen heterocyclischen Rest, mit der Maßgabe, daß X nicht 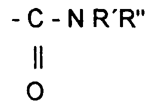 oder - CH₂-R'R'',
worin R' und R'' ein cyclischer oder bicyclischer Rest mit 5 - 10 C-Atomen, von denen eines oder mehrere durch N oder NH, N oder NH und S oder N oder NH und O ersetzt sein können, bedeutet,
oder
einen Rest der Formel II 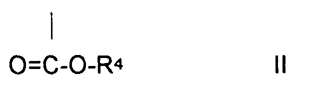 oder
einen Rest der Formel III, 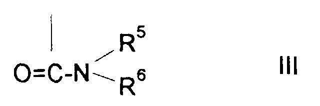 worin
R⁴ einen ein- oder mehrfach hydroxylierten C₂-C₇-Alkylrest, in dem eine oder mehrere nicht benachbarte CH₂-Gruppen durch -O- ersetzt sein können,
und
R⁵ und R⁶ unabhängig voneinander einen ein- oder mehrfach hydroxylierten C₂-C₇-Alkylrest, in dem eine oder mehrere nicht benachbarte CH₂-Gruppen durch -O-ersetzt sein können, wobei einer der beiden Reste R⁵ oder R⁶ auch H sein können,
bedeuten.

4. Verfahren zur Herstellung von Trägermaterialien auf Grundlage von hydroxylgruppenhaltigen Basisträgern, auf deren Oberflächen Polymere durch Pfropfpolymerisation kovalent gebunden werden, dadurch gekennzeichnet, daß die hydroxylgruppenhaltigen Basisträgerteilchen in einer Lösung in Gegenwart von Cer(IV)-lonen suspendiert werden, wobei die Lösung Monomere der Formel IV enthält, 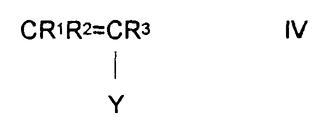 worin
R¹, R² und R³ unabhängig voneinander H oder CH₃
und
Y einen heterocyclischen Rest, mit der Maßgabe, daß Y nicht 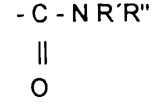 oder - CH₂-R'R'',
worin R' und R'' ein cyclischer oder bicyclischer Rest mit 5 - 10 C-Atomen, von denen eines oder mehrere durch N oder NH, N oder NH und S oder N oder NH und O ersetzt sein können, bedeutet,
oder
einen Rest der Formel V 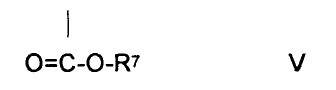 oder
einen Rest der Formel V 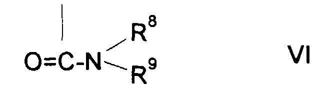 I, worin
R⁷ einen C₂-C₇-Alkylrest mit einer oder mehreren Vorläufergruppen für Hydroxylgruppen, in dem eine oder mehrere nicht benachbarte CH₂-Gruppen durch -O-ersetzt sein können,
und
R⁸ und R⁹ unabhängig voneinander einen C₂-C₇-Alkylrest mit einer oder mehreren Vorläufergruppen für Hydroxylgruppen, in dem eine oder mehrere nicht benachbarte CH₂-Gruppen durch -O- ersetzt sein können, wobei einer der beiden Reste R⁸ oder R⁹ auch H sein können,
bedeuten,
und die genannten Monomeren polymerisiert werden, und gegebenenfalls eine Vorläuferverbindung in eine Hydroxylgruppe umgewandelt wird.

5. Verfahren nach Anspruch 4, dadurch gekennzeichnet, daß unterschiedliche Monomere der Formel IV copolymerisiert werden.

## Claims

1. Method of separating at least two substances in a mixture by means of gel permeation chromatography, characterized in that the support material used comprises linear polymers of water-soluble vinyl monomers which are grafted onto aliphatic hydroxyl groups of the base support and which are each covalently bonded to the base support by way of a terminal monomer unit.

2. Use of a support material consisting of a base support which comprises aliphatic hydroxyl groups onto which covalently bonded linear polymers of water-soluble vinyl monomers are grafted, the polymers each being covalently bonded to the base support by way of a terminal monomer unit, for gel permeation chromatography.

3. Support materials for gel permeation chromatography based on hydroxyl-containing base supports to whose surfaces polymers are covalently bonded, characterized in that
a) the base support comprises aliphatic hydroxyl groups,
b) the covalently bonded polymers are bonded to the support by way of a terminal monomer unit,
c) the polymers comprise monomer units of the formula I,
d) the monomer units are linearly linked; 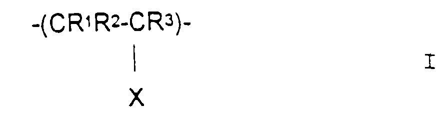 in which
R¹, R² and R³ independently of one another are H or CH₃,
X is a heterocyclic radical, with the proviso that X is not 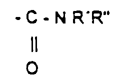 or -CH₂-R'R''
in which R' and R'' are each a cyclic or bicyclic radical of 5-10 carbon atoms of which one or more can be replaced by N or NH, N or NH and S or N or NH and O,
or
is a radical of the formula II 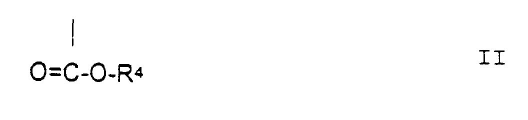 or
is a radical of the formula III 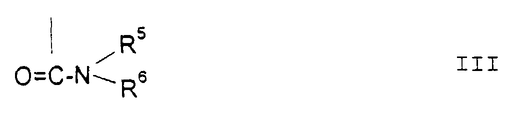 in which
R⁴ is a mono- or polyhydroxylated C₂-C₇-alkyl radical in which one or more non-adjacent CH₂ groups can be replaced by -O-,
and
R⁵ and R⁶ independently of one another are a mono-or polyhydroxylated C₂-C₇-alkyl radical in which one or more non-adjacent CH₂ groups can be replaced by -O-, it being possible for one of the two radicals R⁵ and R⁶ to be H.

4. Process for preparing support materials based on hydroxyl-containing base supports to whose surfaces polymers are covalently bonded by graft polymerization, characterized in that the hydroxyl-containing base support particles are suspended in the presence of cerium (IV) ions in a solution which comprises monomers of the formula IV 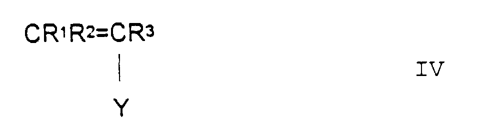 in which
R¹, R² and R³ independently of one another are H or CH₃
and
Y is a heterocyclic radical, with the proviso that Y is not 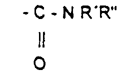 or -CH₂-R'R''
in which R' and R'' are each a cyclic or bicyclic radical of 5-10 carbon atoms of which one or more can be replaced by N or NH, N or NH and S or N or NH and O,
or
is a radical of the formula V 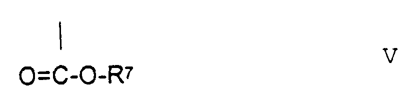 or
is a radical of the formula VI 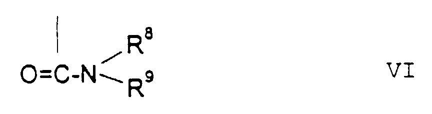 in which
R⁷ is a C₂-C₇-alkyl radical having one or more precursor groups for hydroxyl groups, and in which one or more non-adjacent CH₂ groups can be replaced by -O-,
and
R⁸ and R⁹ independently of one another are a C₂-C₇-alkyl radical having one or more precursor groups for hydroxyl groups, and in which one or more non-adjacent CH₂ groups can be replaced by -O-, it being possible for one of the two radicals R⁸ and R⁹ to be H,
and the said monomers are polymerized and, if desired, a precursor compound is converted into a hydroxyl group.

5. Process according to Claim 4, characterized in that different monomers of the formula IV are copolymerized.

## Revendications

1. Procédé pour séparer au moins deux substances dans un mélange par chromatographie de perméation sur gel, caractérisé en ce que le support utilisé contient des polymères linéaires constitués de monomères vinyliques solubles dans l'eau, greffés sur des groupes hydroxyles aliphatiques du support de base et liés chaque fois de façon covalente au support de base par une unité de monomère terminale.

2. Utilisation d'un support constitué d'un support de base contenant des groupes hydroxyles aliphatiques sur lesquels sont greffés des polymères linéaires liés de façon covalente, constitués de monomères vinyliques solubles dans l'eau, les polymères étant liés chaque fois de façon covalente au support de base par une unité de monomère terminale, pour la chromatographie de perméation sur gel.

3. Supports pour la chromatographie de perméation sur gel sur la base de supports de base contenant des groupes hydroxyles, sur la surface desquels sont liés de façon covalente des polymères, caractérisés en ce que
a) le support de base contient des groupes hydroxyles aliphatiques,
b) les polymères liés de façon covalente sont liés au support par une unité de monomère terminale,
c) les polymères contiennent des unités de monomère de formule I,
d) les unités de monomère sont reliées de façon linéaire 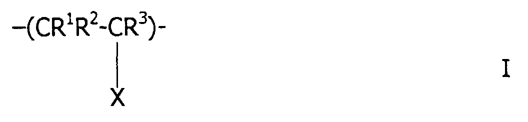 où
R¹, R² et R³ représentent, indépendamment les uns des autres, H ou CH₃,
X représente un reste hétérocyclique, sous réserve que X ne représente pas 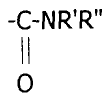 ou -CH₂-R'R'',
R' et R'' étant un reste cyclique ou bicyclique comportant 5 à 10 atomes de C, un ou plusieurs de ces atomes pouvant être remplacés par N ou NH, N ou NH et S ou N ou NH et O,
ou
un reste de formule II 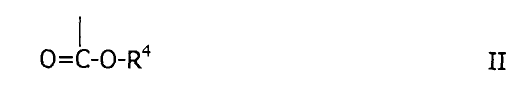 ou
un reste de formule III 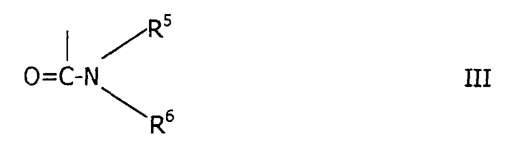
R⁴ représentant un reste alkyle en C₂-C₇ mono- ou polyhydroxylé dans lequel un ou plusieurs groupes CH₂ non adjacents peuvent être remplacés par -O-, et
R⁵ et R⁶ représentant, indépendamment l'un de l'autre, un reste alkyle en C₂-C₇ mono- ou polyhydroxylé dans lequel un ou plusieurs groupes CH₂ non adjacents peuvent être remplacés par -O-, l'un des deux restes R⁵ et R⁶ pouvant être également H.

4. Procédé pour la préparation de supports sur la base de supports de base contenant des groupes hydroxyles, sur la surface desquels sont liés, de façon covalente, des polymères par polymérisation par greffage, caractérisé en ce que l'on met en suspension des particules du support de base contenant des groupes hydroxyles dans une solution en présence d'ions cérium (IV), la solution contenant des monomères de formule IV 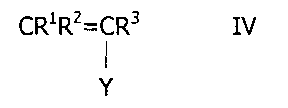 où
R¹, R² et R³ représentent, indépendamment les uns des autres, H ou CH₃ et
Y représente un reste hétérocyclique, sous réserve que Y ne représente pas 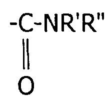 ou -CH₂-R'R'',
R' et R'' représentant un reste cyclique ou bicyclique comportant 5 à 10 atomes de C, un ou plusieurs de ces atomes pouvant être remplacés par N ou NH, N ou NH et S ou N ou NH et O,
ou
un reste de formule V 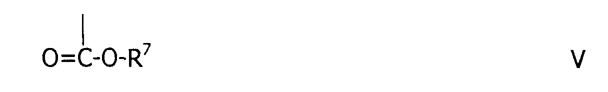 ou
un reste de formule VI 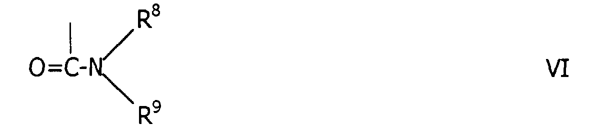
R⁷ représentant un reste alkyle en C₂-C₇ comportant un ou plusieurs groupes précurseurs des groupes hydroxyles, dans lequel un ou plusieurs groupes CH₂ non adjacents peuvent être remplacés par -O-,
et
R⁸ et R⁹ représentant, indépendamment l'un de l'autre, un reste alkyle en C₂-C₇ comportant un ou plusieurs groupes précurseurs des groupes hydroxyles, dans lequel un ou plusieurs groupes CH₂ non adjacents peuvent être remplacés par -O-, l'un des deux restes R⁸ et R⁹ pouvant être également H,
et en ce que l'on polymérise les monomères indiqués et éventuellement en ce que l'on transforme un composé précurseur en un groupe hydroxyle.

5. Procédé selon la revendication 4, caractérisé en ce que l'on copolymérise des monomères de formule IV différents.
